# Europäisches Patentamt

# European Patent Office

# Office européen des brevets

(11) Veröffentlichungsnummer: **0 191 158**
A2

(12) **EUROPÄISCHE PATENTANMELDUNG**

(21) Anmeldenummer: 85114918.7

(22) Anmeldetag: 25.11.85

(51) Int. Cl.⁴: **B 65 G 47/30**

(30) Priorität: 11.02.85 DE 3504555

(43) Veröffentlichungstag der Anmeldung: 20.08.86
Patentblatt 86/34

(84) Benannte Vertragsstaaten: AT BE FR GB IT

(71) Anmelder: **JAGENBERG AG, Kennedydamm 15-17,
D-4000 Düsseldorf 30 (DE)**

(72) Erfinder: **Zodrow, Rudolf, Lichtstrasse 37,
D-4000 Düsseldorf (DE)**
Erfinder: **Buchholz, Rainer, Brinellstrasse 27,
D-4000 Düsseldorf (DE)**

(74) Vertreter: **Pfeiffer, Helmut, Jagenberg AG Patentwesen
Kennedydamm 15-17 Postfach 1123,
D-4000 Düsseldorf 30 (DE)**

(54) Vorrichtung zum Verteilen von Gegenständen, insbesondere Flaschen.

(57) Die Erfindung bezieht sich auf eine Vorrichtung zur gruppen- bzw. reihenweise Übergabe von in Reihen geförderten Gegenständen, insbesondere aufrecht stehenden Gefäßen, mit einer Fördereinrichtung, die mit Übergabeelementen (7–9, 26–28) für die Gefäße versehen ist, wobei die Übergabeelemente (7–9, 26–28) Halteelemente in Form von Saugern oder Klammern aufweisen. Bei den Übergabeelementen (7–9, 26–28) handelt es sich um Kreissegmente, die auf einem rotierenden Träger (10) exzentrisch angeordnet sind. Während der Träger (10) rotiert, bewegen sich die Übergabeelemente (7–9, 26–28) entweder rotierend oder oszillierend und nehmen nach Art des Abwälzverfahrens jeweils eine Gruppe von Gefäßen durch Saug- oder Klammerelemente an einer ersten peripher zum Träger (10) angeordneten Entnahmestelle auf und geben diese aufgenommenen Gefäße an einer zweiten, ebenfalls peripher angeordneten Übernahmestelle gleichfalls nach Art des Abwälzverfahrens wieder ab. Der oszillierende bzw. rotierende Antrieb der Übergabeelemente (7–9, 26–28) ist durch Kurven- bzw. Planetenradgetriebe o.ä. Antriebe möglich. Obgleich die Vorrichtung eigens zur Aufteilung von einreihig zugeförderten Gefäßen auf einen mehrbahnigen Abtransport zu übergeben bzw. aufzuteilen entwickelt wurde, ist es auch möglich, die vorderste Gefäßreihe eines mehrbahnigen Zuführförderers gleichzeitig aufzunehmen und auf einen einbahnigen Abtransport abzustellen.

7524z
85.2.01
Mehrbahnaufteilung
07.02.85

JAGENBERG AKTIENGESELLSCHAFT, Düsseldorf

## Vorrichtung zum Verteilen von Gegenständen, insbesondere Flaschen

Die Erfindung bezieht sich auf eine Vorrichtung zur gruppen- bzw. reihenweise Übergabe von in Reihen geförderten Gegenständen, insbesondere aufrecht stehenden Gefäßen, mit einer Fördereinrichtung, die mit Übergabeelementen für die Gefäße versehen ist, wobei die Übergabeelemente Halteelemente für die Gefäße aufweisen.

Bei einer bekannten Vorrichtung zum Verteilen von in Förderrichtung längs sowohl als auch quer dazu zugeführten Flaschen werden diese reihen- oder gruppenweise von oben mittels durch Druckluft betätigbare, schlauchförmige Greifer erfaßt. Dabei werden diese Greifer soweit über die Flaschenköpfe gestülpt, daß wesentliche Teile des Schlauches unterhalb des Flaschenkopfes zu liegen kommen. Nachdem die Druckluft betätigt wurde und die Flaschen im Bereich ihrer konischen Hälse durch die Greifer eingespannt worden sind, werden die Flaschen freihängend angehoben und um eine waagerechte Achse weiterhin freihängend in eine andere Transportposition gefördert. Nachdem die Greifer nach Abschaltung der Druckluft die Flaschen zum Weitertransport wieder freigeben, indem die Greifer nach oben von den Flaschen wegbewegt werden, schwenken die Greifer in ihre Ausgangsposition zurück, um die nächste Gruppe von Flaschen zu ergreifen. Eine derartige Vorrichtung, die intermittierend arbeitet, weist den Nachteil auf, daß beim Überstülpen der Greifer über die Flaschenköpfe sowohl als auch beim Abstreifen dieser Greifer von den Flaschenköpfen die Flaschen in ihrer Standfestigkeit beeinträchtigt werden.

-2-

Diese Beeinträchtigung tritt besonders dann verstärkt auf, wenn die Standsicherheit schon durch das Transportmittel oder durch einen beschädigten Flaschenboden noch verstärkt wird. Aus diesem Grunde können derartige Flaschentransporteure nicht ohne Aufsichtspersonal betrieben werden, die aus dem vorgenannten Grunde umgefallene Flaschen wieder aufrichten müssen, so daß ein störungsfreier Weitertransport sichergestellt ist. Ein weiterer Nachteil besteht darin, daß, bedingt durch die waagerechte Achse der schwenkaren Fördereinrichtung, ein hoher Konstruktionsmittelaufwand erforderlich ist. Weiterhin ist von Nachteil, daß bei dem vorbeschriebenen Transport von foliierten Flaschen beim Abstreifen des Greifers von den abgestellten Flaschen die Foliierung zerstört wird, so daß der Ausstattungseffekt dieser Flaschen verlorengeht.

Mit der DE-PS 31 41 364 ist eine weitere Vorrichtung bekanntgeworden, bei der kontinuierlich zugeförderte Flaschen in einen Klammerstern aufgenommen werden. Diesem Klammerstern sind zwei weitere Klammersterne nachgeordnet, die nacheinander mit dem ersten Klammerstern zusammenwirken und deshalb an seinem Umfang hintereinander angeordnet sind. Die von dem ersten Klammerstern aufgenommenen Flaschen werden abwechselnd in den zweiten bzw. dritten Klammerstern übergeben. Diesen nachgeschalteten Klammersternen ist jeweils ein doppelreihiger Abtransport derart tangential zugeordnet, daß ein zweireihiges Freilassen der Flaschen aus den Klammersternen ermöglicht wird. Auf die- se Weise ist zwar ein gesteuerter Abbau der Transportgeschwindigkeit bzw. Teilung der Gefäße in den beiden wegführenden Reihen möglich, dafür muß jedoch ein erheblicher konstruktiver Aufwand in Kauf genommen werden, insbesondere für die störungsfreie Übergabe zwischen den einzelnen Klammersternpaaren. Die Probleme liegen aber vor allem darin, daß zwischen den einzelnen Sternen unterschiedliche Teilungen verwendet werden und daß die Sterne nicht formschlüssig

-3-

ineinandergreifen, so daß die Flaschen zusätzlich zu ihren
Vorbewegungen noch seitlich verschoben werden müssen. Besonders im
Übergabebereich des ersten Sternpaares besteht transportmäßig eine
instabile Stelle, in welcher die Flaschen nicht exakt geführt werden
und hier ins Taumeln geraten können und somit durch Umfallen den
allgemeinen Transportvorgang unterbrechen. Der vorgenannten
Vorrichtung haftet ein weiterer wesentlicher Nachteil dadurch an,
daß die Flaschen von den nachgeschalteten Sternen praktisch zur
gleichen Zeit auf jeweils ein doppelbahniges Abtransportband
abgegeben werden, welches langsamer läuft, als die
Zuführgeschwindigkeit der Klammersterne. Die gegenüber der
Umfangsgeschwindigkeit der Klammersterne verzögerte Geschwindigkeit
der Abtransportbänder ist aus dem Grunde nötig, um die Flaschen
dicht an dicht aufzunehmen. Der vorerwähnte Nachteil bei dieser
Abgabe entsteht nun dadurch, daß einerseits durch Klammersterne in
einem fast führungslosen Bereich freigegebene Flaschen ohnehin zum
Taumeln neigen. Andererseits wird durch das Aufschieben der
ungesicherten Flaschen auf ein langsamer als die
Zuführgeschwindigkeit laufendes Band die vorbeschriebene
Taumelneigung noch verstärkt, wodurch auch an dieser Stelle Flaschen
verstärkt umfallen können.

Der Erfindung liegt die Aufgabe zugrunde, eine Vorrichtung der eingangs genannten Art zu schaffen, die bei baulich geringem Aufwand
und kompakter Bauweise eine Störung des Betriebsablaufs infolge
einer definierten und schonsamen Führung der zu transportierenden
Behälter bei der Übergabe von einer ersten Transportposition in eine
zweite Transportposition vermeidet unter Berücksichtigung einer
größtmöglichen Verringerung der Transportgeschwindigkeit.

Diese Aufgabe wird erfindungsgemäß dadurch gelöst, daß bei der
eingangs geschilderten Vorrichtung die Fördereinrichtung aus einem
antreibbaren ein oder mehrere, wenigstens teilweise drehbare
Übergabeelemente tragenden Träger besteht, durch den das oder die
Übergabeelemente mit den Halteelementen an einer

-4-

reihenförmigen Aufnahme- bzw. Übergabestelle vorbeiführbar ist bzw. sind. Auf diese Weise wird sichergestellt, daß die unter Umständen mit einer hohen Transportgeschwindigkeit zugeförderten Behälter auf kürzestem Weg mehrbahnig nebeneinander nahezu gleichzeitig abgestellt werden, wobei die Geschwindigkeit des Abtransportes der Aufsetzgeschwindigkeiten der Gefäße entspricht. Es ist somit eine definierte Aufnahme, Führung und Übergabe der Gefäße sichergestellt. Ein weiterer Vorteil der erfindungsgemäßen Vorrichtung besteht darin, daß durch die sehr genau an die Übergabegeschwindigkeit der Gefäße anpaßbare Abtransportgeschwindigkeit die Gefäße berührungslos weitertransportiert werden können, so daß eine größtmögliche Lärmminderung erreicht wird. Ganz besondere Vorteile liegen noch darin, daß mit den vorgeschlagenen Mitteln der Übergabevorgang umgekehrt werden kann, d.h., daß Gefäße von einem mehrbahnigen Zuführförderer gleichzeitig entnommen und einem einbahnigen Abtransport übergeben werden können. Hierbei ist es gleichgültig, ob die reihenweise Aufnahme bzw. Übergabe der Gefäße von geradlinigen bzw. gekrümmten Aufnahmestellen an geradlinien bzw. gekrümmten Übergabestellen erfolgt. Weiterhin werden foliierte Flaschen nicht beschädigt, da diese im Rumpfbereich erfaßt werden.

Eine weitere Ausgestaltung der Vorrichtung wird darin gesehen, daß die drehbaren Übergabeelemente zur Übergabe der Gefäße eine volle Umdrehung durchführen können oder, je nach Bedarf, auch nur oszillierend bewegbar sind. Hierdurch wird erreicht, daß die Gefäße entweder auf kürzestem Weg über den Mittelpunkt eines rotierenden Trägers auf die andere Seite des Trägers transportiert werden oder daß die Gefäße während des Transportes ständig im Umfangsbereich des Trägers verbleiben und an nahezu jeder beliebigen Stelle am Umfang dieses rotierenden Trägers wieder abgegeben werden können.

Die gewünschte störungsfreie Aufnahme bzw. Übergabe der Gefäße wird dadurch erreicht, daß jedes Übergabeelement eine konvex gewölbte Außenfläche aufweist, mit welches es an der Aufnahme- bzw. Übergabestelle kontinuierlich abwälzbar ist bzw. wechselweise beschleunigbar

-5-

und verzögerbar ist. Zur weiteren Lösung der Aufgabe wird
vorgeschlagen, daß jedes Übergabeelement im Moment der Aufnahme bzw.
der Übergabe der Gefäße einen dem Drehsinn des Trägers gegensinnigen eigene Drehung ausführt und jedes der Übergabeelemente eine
Drehachse aufweist, die jeweils durch ein Getriebe, insbesondere
Ungleichförmigkeitsgetriebe, antreibbar ist. Hierbei wird das
Ungleichförmigkeitsgetriebe dadurch gebildet, daß es aus einer ortsfesten, konzentrisch zum Träger angeordneten Nutkurve und je Übergabeelement einem, die Nutkurve abtastenden Kurvenfühler besteht,
der jeweils mit dem freien Ende der jeweiligen Drehachse drehfest
verbunden ist.

In einem anderen Ausführungsbeispiel des Getriebes besteht dieses
aus einem konzentrisch zum Träger angeordneten, innenverzahnten
Sonnenrad und einem damit kämmenden Ritzel, das mit dem freien Ende
der jeweiligen Drehachse drehfest verbunden ist.

Eine weitere Getriebevariante für das Ungleichförmigkeitsgetriebe
ist darin zu sehen, daß das Ungleichförmigkeitsgetriebe aus einem,
konzentrisch zum Träger angeordneten innenverzahnten Ring besteht,
dessen Zahnabstände ungleichmäßig sind und mit dem ein triebstockartiges Ritzel kämmt, das mit dem freien Ende der jeweiligen Drehachse drehfest verbunden ist.

Zu den in diesem Rahmen denkbaren Möglichkeiten, die Übergabeelemente beschleunigt bzw. verzögert anzutreiben, sind noch eine ganze
Reihe von verschiedenen Getrieben denkbar. So u.a. sogenannte Summengetriebe, bei welchen zwei unabhängige Getriebeeingänge bestehen,
die die unabhängige und variable Überlagerung von verschiedenen
Antriebsgeschwindigkeiten zulassen, um am Getriebeausgang eine
beliebige beschleunigte oder verzögerte Abtriebsgeschwindigkeit für
die Übergabeelemente zu erzeugen.

Vorteilhafte Weiterbildungen der Erfindung bestehen auch darin, daß

-6-

die Übergabeelemente zur Lagerachse des Träger exzentrisch auf
diesem angeordnet sind und die Übergabeelemente selbst aus
Kreissegmenten gebildet sind, deren Drehachse auf der jeweiligen
Symmetrieachse zwischen dem Kreismittelpunkt und der gewölbten
Außenfläche jedes Kreissegmentes liegt. Zur betriebssicheren
Ausbildung der Vorrichtung weisen die Außenflächen jedes
Übergabeelementes Halteelemente in Form von Taschen und
Saugelementen bzw. Klammern auf, womit die Gefäße störungsfrei auch
bei hohen Geschwindigkeiten von einer ersten Transportposition in
eine zweite Transportposition übergeben werden können.

Im Nachstehenden wird ein Ausführungsbeispiel der Erfindung anhand
der Zeichnungen näher erläutert. Es zeigt:

Fig. 1
Eine Verteileinrichtung für Gefäße von einem ein- zu einem mehrbahnigen Behältertransport in Aufsicht,

Fig. 2
eine Verteileinrichtung für Gefäße von einem mehr- zu einem einbahnigen Behältertransport in Aufsicht,

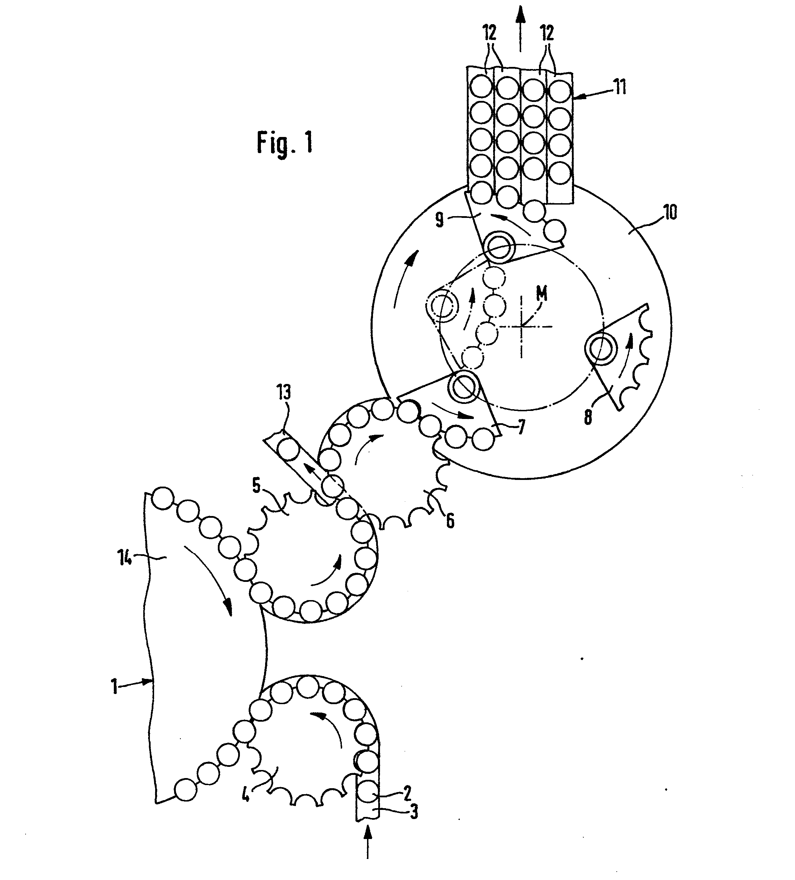

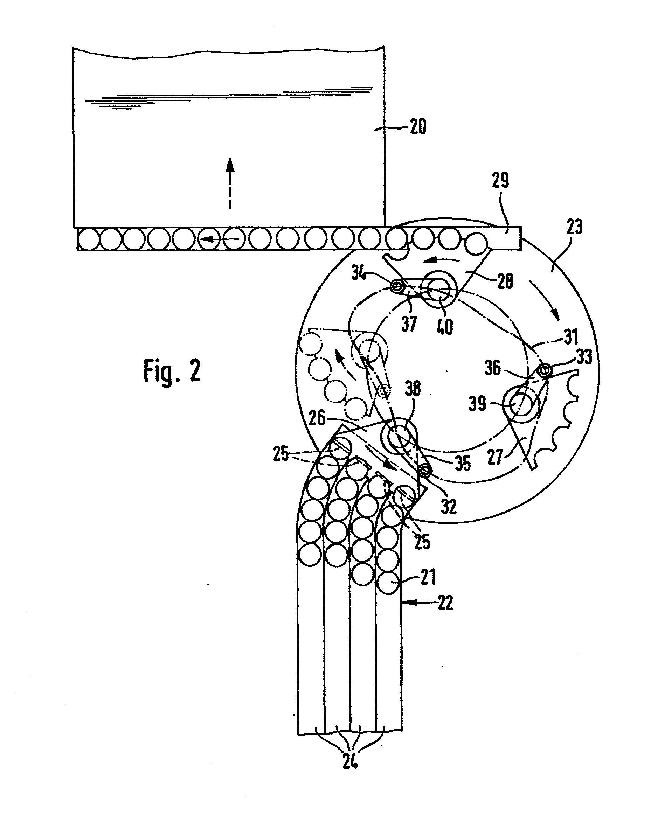

Fig. 3
eine Verteileinrichtung für Gefäße nach Fig. 1 und 2, z.B. zwischen
zwei Flaschenbehandlungsmaschinen und einer zwischengeschalteten
Pufferstation für die Flaschen und

Fig. 4
ein Getriebebeispiel für den Antrieb der Übergabeelemente
entsprechend der Einrichtung nach Figur 1.

Eine Verteileinrichtung für Gefäße, in welcher einbahnig zugeführte
Gefäße auf einen mehrbahnigen Abtransport für Gefäße verteilt werden, ist in Figur 1 beispielsweise zwischen einer Flaschenbehand-

-7-

lungsmaschine 1 und einer nicht gezeigten Flaschenweiterbehandlungsmaschine dargestellt. Dabei werden die Flaschen 2 mit Hilfe des
Zuführförderers 3 über den Einlaufstern 4 der Flaschenbehandlungsmaschine 1 zugeführt. Diese Flaschenbehandlungsmaschine 1 kann
beispielsweise eine Etikettiermaschine, ein Füller, ein
Flascheninspektor od.dgl. sein. Nachdem die Flaschen 2 die
Flaschenbehandlungsmaschine 1 verlassen haben, werden sie über einen
Auslaufstern 5, beispielsweise einem weiteren Transportstern 6,
zugeführt. Hier werden die Flaschen 2 von den Übergabeelementen 7
bis 9, die auf dem Träger 10 angeordnet sind, nacheinander entnommen
und dem mehrbahnigen Abtransport 11 zugeführt.

Im dargestellten Beispiel läuft der Träger 10 im Uhrzeigersinn,
während die einzelnen Übergabeelemente 7 bis 9 entgegen Uhrzeigersinn rotieren. Während das in Aufnahmestellung gezeigte Übergabeelement 7 gerade die letzte Flasche aufnimmt und danach anschließend
die Flaschenreihe oder -gruppe über den Mittenbereich M des Trägers
10 in Richtung auf den Abtransport 11 fördert, wird das
Übergabeelement 8 auf den Transportstern 6 zubewegt, um die nächste
Flaschenreihe bzw. -gruppe aufzunehmen. Währenddessen hat das
Übergabeelement 9 die von ihr geförderte Flaschenreihe auf die sehr
langsam laufenden Bänder 12 des Abtransportes 11 abgesetzt.

In diesem Ausführungsbeispiel wurden die Sterne 5 und 6 nur deshalb
zwischengeschaltet, um zur Komplettierung der Anlage eine Möglichkeit zu haben, mit welcher beanstandete Flaschen über den Abtransport 13 aussortiert werden können. Der eigentliche Erfindungsgedanke geht davon aus, daß die Übergabeelemente 7 bis 9 unmittelbar
an die Flaschenbehandlungsmaschine 1 angeschlossen werden können, so
daß die Flaschen direkt von dem Flaschenteller 14 der Flaschenbehandlungsmaschine 1 abgenommen werden. Sollten die Flaschen unter
Ausschließung des Transportsternes 6 sofort von dem Auslaufstern 5
aufgenommen werden, so wird der Träger 10 mit seinen Übergabe-

-8-

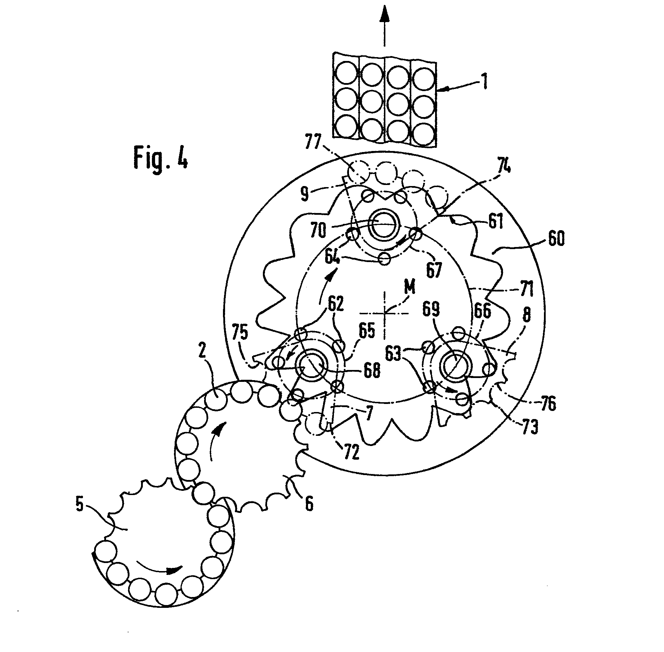

elementen 7 bis 9 entgegengesetzt angetrieben. Der Antrieb für die
Übergabeelemente ist in Figur 4 beschrieben.

Zwischen der Aufnahmestellung des Übergabeelementes 7 und der Übergabestellung des Übergabeelementes 9 ist die Zwischenstellung
beispielsweise des Übergabeelementes 9 strichpunktiert dargestellt.

Die in Figur 2 dargestellte Verteileinrichtung für Gefäße zeigt die
Einsatzmöglichkeit des Erfindungsgegenstandes zwischen einem nicht
dargestellten Auspacker für Flaschen und einer Flaschenwaschmaschine 20. Hierbei werden die Flaschen 21 mit Hilfe eines mehrbahnigen Zuführförderers 22 dem Träger 23 im wesentlichen radial zugeführt. Dabei laufen die Flaschen 21 jeweils am Ende der Einzelbänder
24 gegen einzeln in der Höhe steuerbare Anschläge 25. Von dieser
Aufnahmestelle übernehmen die Übergabeelemente 26 bis 28 nacheinander eine Gruppe oder Reihe von Flaschen 21 und stellen diese auf den
einbahnigen Abtransport 29 ab. Dieser Abtransport 29 ist gleichzeitig Zuführförderer für die Flaschenwaschmaschine 20.

Während in dem Beispiel entsprechend Figur 1 von rotierenden Übergabeelementen 7 bis 9 die Rede war, sind in diesem Ausführungsbeispiel oszillierende Übergabeelemente 26 bis 28 dargestellt. Das
Ungleichförmigkeitsgetriebe für die Übergabeelemente 26 bis 28 hat
folgenden Aufbau: In einer ortsfesten, geschlossenen Nutkurve 31
läuft für jedes Übergabeelement 26 bis 28 ein Fühler 32 bis 34.
Diese sitzen am freien Ende der Hebelarme 35 bis 37, die mit ihrem
anderen Ende mit den jeweiligen Drehachsen 38 bis 40 der
Übergabeelemente 26 bis 28 drehfest verbunden sind. Indem der Träger
23 im Uhrzeigersinn dreht, werden die Fühler 32 bis 37 durch die
Nutkurve 31 gezogen, wobei, entsprechend dem Kurvenverlauf, ein
Verschwenken der Fühler 32 bis 37 erfolgt, das auf die
Übergabeelemente 26 bis 28 übertragen wird, wodurch diese oszillieren.

Das Übergabeelement 28 ist im linken Teil des Trägers strichpunktiert dargestellt, womit gezeigt werden soll, daß die zu beför-

-9-

dernden Flaschen im wesentlichen immer im Außenbereich des
Trägers 10 bleiben. Hierdurch ist es möglich, wie bereits oben
erwähnt, den Abtransport 29 an nahezu beliebiger Stelle im
Umfangsbereich des Trägers 23 anzuordnen.

Um eine höhere Zuführleistung für die Flaschenwaschmaschine 20 zu
erzielen, ist es möglich, den Abtransport 29 beispielsweise nach
rechts zu verlängern und von oben eine weitere Verteileinrichtung
anzuordnen. Diese Anordnung kann nach Bedarf erweitert werden.

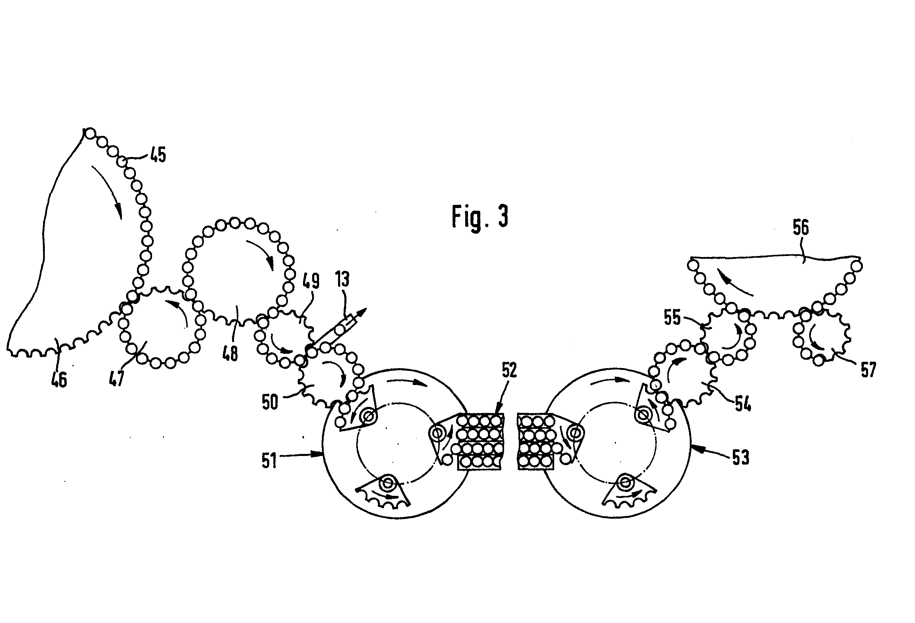

In Figur 3 ist eine Verteileinrichtung, beispielsweise zwischen zwei
Flaschenbehandlungsmaschinen, mit einem zwischengeschalteten Puffer
für die Flaschen dargestellt. Hierbei werden die Flaschen 45 von dem
Füller 46 über den Zwischenstern 47 einer Verschließmaschine 48
zugeführt, von wo die Flaschen 45 über einen Sortierstern 49 beispielsweise in Form eines Klammersterns einem Transportstern 50
zugeführt werden. Zwischen dem Sortierstern 49 und dem Transportstern 50 ist ein Abtransport 13 für die aussortierten Flaschen vorgesehen.

Von dem Transportstern 50 werden die Flaschen von einer ersten Verteileinrichtung 51 einem mehrbahnigen Transportband 52 zugeführt,
welches zwischen den zwei Flaschenbehandlungsmaschinen als
Pufferzone zwischengeschaltet wurde. Vom Auslauf auf der rechten
Seite des Transportbandes 52 werden die Flaschen durch eine zweite
Verteileinrichtung 53, beispielsweise einem Vorstern 54, übergeben,
von wo die Flaschen über den Einlaufstern 55 der
Etikettiermaschine 56 zugeführt und über dem Auslaufstern 57
abgeführt werden.

Auch in diesem Beispiel können die Sterne 49, 50, 54 und 55 entfallen, so daß die Flaschen 45 sofort von der Schließmaschine 48
aufgenommen und über die Pufferzone direkt der Etikettiermaschine 56
übergeben werden. Sollten nur die Sterne 50 und 54 entfallen, so
müßten die durch

-10-

Pfeile dargestellten Drehbewegungen der ersten und zweiten Verteileinrichtung 51, 53 umgekehrt werden.

Im übrigen funktionieren die Verteileinrichtungen 51, 53
entsprechend der Figur 1, wobei die zweite Verteileinrichtung 53
spiegelbildlich arbeitet.

In Figur 4 ist der Träger 10 der Verteileinrichtung nach Figur 1 mit
seinen Übergabeelementen 7 bis 9 noch einmal im einzelnen dargestellt, um anhand dieses Ausführungsbeispiels den Antrieb für die
Übergabeelemente 7 bis 9 zu erklären. Unterhalb des Trägers 10 ist
eine ortsfeste Zahnkurve 60 dargestellt. Diese Zahnkurve weist Zähne
mit unterschiedlichen Teilungsabständen auf. Auf den Flanken 61 der
Zahnkurve 60 laufen für jedes Übergabeelement 7 bis 9
Rollengruppen 62 bis 64, die in einem rotierenden Triebstock 65 bis
67 gelagert sind. Diese Triebstöcke 65 bis 67 sind jeweils mit den
Drehachsen 68 bis 70 der Übergabeelemente 7 bis 9 drehfest verbunden.

Durch die unterschiedliche Teilung der Zähne der Zahnkurve 60 ist es
möglich, innerhalb von bestimmten Bereichen jede gewünschte
Beschleunigung bzw. Verzögerung der Übergabeelemente 7 bis 9 zu
erzeugen, so daß jeweils die gewünschte Geschwindigkeitsanpassung
für die Übergabeelemente 7 bis 9 an die Geschwindigkeiten der
Aufnahme- bzw. Übergabestelle bewerkstelligt werden kann. Zur
Unterstützung dieser Geschwindigkeitsanpassung werden aufgrund der
Erfindung weitere Mittel zur Verfügung gestellt, und zwar derart,
daß die geometrische Gestaltung der Kreissegmentgröße aller in
dieser Einrichtung beschriebenen Übergabeelemente frei wählbar ist.
Darüber hinaus ist auch der Abstand der Drehachsen 68 bis 70 zur
konvex gewölbten Außenfläche der Übergabeelemente 7 bis 9 sowie der
Durchmesser der Umlaufbahn 71 für die Drehachsen 68 bis 70 als frei
wählbare Größen in die Gesetzmäßigkeit zur Anpassung der gewünschten
Geschwindigkeiten mit einzubeziehen.

Die die Aufnahme- bzw. Übergabestelle tangierenden Außenflächen 72

-11-

bis 74 weisen die den zu übergebenden Flaschen angepaßten Taschen 75
bis 77 auf. In diese Taschen 75 bis 77 sind die an sich bekannten
und nicht dargestellten Saug- und Klammerelemente zur Sicherung der
transportierten Flaschen integriert.

7579z
85.2.01
Mehrbahnaufteilung
07.02.85

JAGENBERG AKTIENGESELLSCHAFT, Düsseldorf

PATENTANSPRÜCHE

1.

Vorrichtung zur gruppen- bzw. reihenweise Übergabe von in Reihen geförderten Gegenständen, insbesondere aufrecht stehenden Gefäßen, mit einer Fördereinrichtung, die mit Übergabeelementen für die Gefäße versehen ist, wobei die Übergabeelemente Halteelemente für die Gefäße aufweisen, d a d u r c h   g e k e n n z e i c h - n e t , daß die Fördereinrichtung aus eionem antreibbaren, ein- oder mehrere, wenigstens teilweise drehbare Übergabeelemente (7 – 9, 26 – 28) tragenden Träger (10, 23) besteht, durch den das oder die Übergabeelemente (7 – 9, 26 – 28) mit den Halteelementen an einer reihenförmigen Aufnahme- bzw. Übergabestelle vorbeiführbar ist bzw. sind.

2.

Vorrichtung nach Anspruch 1, d a d u r c h   g e k e n n z e i c h - n e t , daß das oder die Übergabeelemente (7 – 9, 26 – 28) oszillierend bewegbar ausgebildet ist bzw. sind.

3.

Vorrichtung nach den Ansprüchen 1 oder 2, d a d u r c h   g e - k e n n z e i c h n e t , daß jedes Übergabeelement (7 – 9, 26 – 28) eine konvex gewölbte Außenfläche (72 – 74) aufweist, mit welcher es an der Aufnahme- bzw. Übergabestelle kontinuierlich abwälzbar bzw. wechselweise beschleunigbar und verzögerbar ist.

-2-

**4.**

Vorrichtung nach einem oder mehreren der Ansprüche 1 bis 3,
d a d u r c h   g e k e n n z e i c h n e t , daß jedes Übergabeelement (7 - 9, 26 - 28) im Moment der Aufnahme bzw. der Übergabe
der Gefäße (2, 21, 45) einen dem Drehsinn des Trägers (10, 23)
gegensinnige eigene Drehung ausführt und jedes der Übergabeelemente
(7 - 9, 26 - 28) eine Drehachse (38 - 40, 68 - 70) aufweist, die
jeweils durch ein Getriebe, insbesondere Ungleichförmigkeitsgetriebe, antreibbar ist.

**5.**

Vorrichtung nach Anspruch 2 und 4, d a d u r c h   g e k e n n -
z e i c h n e t , daß das Ungleichförmigkeitsgetriebe aus einer
ortsfesten, konzentrisch zum Träger (10, 23) angeordneten Nutkurve
(31) und je Übergabeelement (26 - 28) einem, die Nutkurve (31)
abtastenden Kurvenfühler (32,35/33,36/34,37) besteht, der jeweils
mit dem freien Ende der jeweiligen Drehachse (38 - 40) drehfest verbunden ist (Fig. 2).

**6.**

Vorrichtung nach Anspruch 4, d a d u r c h   g e k e n n -
z e i c h n e t , daß das Getriebe aus einem konzentrisch zum Träger
(10) angeordneten innenverzahnten Sonnenrad und einem damit
kämmenden Ritzel besteht, das mit dem freien Ende der jeweiligen
Drehachse drehfest verbunden ist.

**7.**

Vorrichtung nach Anspruch 4, d a d u r c h   g e k e n n -
z e i c h n e t , daß das Ungleichförmigkeitsgetriebe aus einem, mit

-3-

ungleichmäßigen Abständen versehenen, konzentrisch zum Träger (10) angeordneten innenverzahnten Zahnkurve (60) besteht, mit der je Übergabeelement (7 - 9) ein triebstockartiges Ritzel (65 - 67) kämmt, das mit dem freien Ende der jeweiligen Drehachse (68 - 70) drehfest verbunden ist (Fig. 4).

8.
Vorrichtung nach einem oder mehreren der Ansprüche 1 bis 7, d a d u r c h   g e k e n n z e i c h n e t , daß die Übergabeelemente (7 - 9, 26 - 28) zur Lagerachse (M) des Trägers (10, 23) exzentrisch auf diesem angeordnet sind.

9.
Vorrichtung nach einem oder mehreren der Ansprüche 1 bis 8, d a d u r c h   g e k e n n z e i c h n e t , daß die Übergabeelemente (7 - 9, 26 - 28) aus Kreissegmenten gebildet sind, deren Drehachse (38 - 40, 68 - 70) auf der jeweiligen Symmetrieachse zwischen dem Kreismittelpunkt und der gewölbten Außenfläche (72 - 74) jedes Kreissegmentes liegt.

10.
Vorrichtung nach einem oder mehreren der Ansprüche 1 bis 9, d a d u r c h   g e k e n n z e i c h n e t , daß die gewölbte Außenfläche (72 - 74) jedes Übergabeelementes (7 - 9, 26 - 28) die Halteelemente in Form von Taschen (76) und Saugelementen aufweist.

11.
Vorrichtung nach einem oder mehreren der Ansprüche 1 bis 9, d a d u r c h   g e k e n n z e i c h n e t , daß die gewölbte Außenfläche (72 - 74) jedes Übergabeelementes (7 - 9, 26 - 28) die Halteelemente in Form von Klammern aufweist.

Fig. 1

Fig. 2

0191158

Fig. 3

Fig. 4